# EUROPEAN PATENT APPLICATION

(11) **EP 4 810 991 A1**
(43) Date of publication of application: **23.09.2026**
(21) Application number: 24906961.8
(22) Date of filing: 07.11.2024
(51) Int. Cl.: G01S 7/497, G01C 3/06, G01S 17/894

(54) **IMAGING DEVICE AND INTERFERENCE DETECTION METHOD**

(30) Priority: 19.12.2023 JP 2023213802
(71) Applicant: JVCKenwood Corporation, Yokohama-shi, Kanagawa 2210022 (JP)
(72) Inventor: MOMIYAMA Etsuro, Yokohama-shi Kanagawa 221-0022 (JP)
(74) Representative: Wagner & Geyer
(86) International application number: PCT/JP2024/039614
(87) International publication number: WO 2025/134573

(57) **Abstract**

An RGB image acquisition unit (30) acquires an RGB image of an object. A ranging image acquisition unit (32) acquires a ranging image of the object coaxially. An RGB image motion detection unit (40) detects a motion in the RGB image pixel-by-pixel by finding a difference between a current frame and a previous frame of the RGB image. A ranging image motion detection unit (42) detects a motion in the ranging image pixel-by-pixel by finding a difference between a current frame and a previous frame of the ranging image. An interference determination unit (50) determines presence or absence of interference of infrared light at a time of acquisition of the ranging image, based on presence or absence of a motion in the RGB image and presence or absence of a motion in the ranging image.

## Description

### TECHNICAL FIELD

The present invention relates to an imaging apparatus and an interference detection method.

### BACKGROUND ART

A ToF (Time of Flight) camera that calculates a distance to an object by irradiating the object with an infrared light and measuring the time it takes to receive a reflected light is known and is used for object recognition and three-dimensional measurement of objects.

When multiple RGB cameras equipped with ToF sensors are used to photograph an object at the same time, the infrared light from the multiple RGB cameras equipped with ToF sensors interfere with each other, making it impossible to acquire an accurate ranging image. When a three-dimensional model of the object is generated from an RGB image and a ranging image, a problem arises in that the three-dimensional model of the object is greatly disturbed as a result of using abnormal distance data created by interference.

Patent literature 1 discloses a ranging apparatus capable of mitigating, when it is determined that saturated pixels occur in an area of light-receiving pixels for which saturation determination is made, an impact from interference by invalidating distance values of pixels included in the area of light-receiving pixels for which saturation determination is made.

### RELATED-ART LITERATURE

### PATENT LITERATURE

[Patent Literature 1] JP2023-4120

### SUMMARY OF INVENTION

When using multiple RGB cameras equipped with ToF sensors to range an object in real time, it is necessary to synchronize the driving of the cameras to avoid interference of the infrared light from the cameras, which requires providing a synchronization signal line or a system to manage synchronization.

The embodiment addresses the issue described above, and a purpose thereof is to provide a technology capable of reducing an impact from infrared light interference during ranging.

An imaging apparatus according to an embodiment includes: an RGB image acquisition unit that acquires an RGB image of an object; a ranging image acquisition unit that acquires a ranging image of the object coaxially; an RGB image motion detection unit that detects a motion in the RGB image pixel-by-pixel by finding a difference between a current frame and a previous frame of the RGB image; a ranging image motion detection unit that detects a motion in the ranging image pixel-by-pixel by finding a difference between a current frame and a previous frame of the ranging image; and an interference determination unit that determines presence or absence of interference of infrared light at a time of acquisition of the ranging image, based on presence or absence of a motion in the RGB image and presence or absence of a motion in the ranging image.

Another embodiment relates to an interference detection method. The method includes: detecting a motion in an RGB image of an object pixel-by-pixel by finding a difference between a current frame and a previous frame of the RGB image; detecting a motion in a coaxially acquired ranging image of the object by pixel by finding a difference between a current frame and a previous frame of the ranging image; and determining presence or absence of interference of infrared light at a time of acquisition of the ranging image, based on presence or absence of a motion in the RGB image and presence or absence of a motion in the ranging image.

Optional combinations of the aforementioned constituting elements, and implementations of the embodiments in the form of methods, apparatuses, systems, recording mediums, and computer programs may also be practiced as modes of the embodiments.

According to the embodiment, a technology capable of reducing an impact from infrared light interference during ranging can be provided.

### BRIEF DESCRIPTION OF DRAWINGS

[Fig. 1] Fig. 1 shows a configuration of an imaging apparatus according to the embodiment.
[Fig. 2] Fig. 2 shows a criterion for determining the presence or absence of infrared light interference pixel-by-pixel by the interference determination unit.
[Fig. 3] Figs. 3A-3C show how the interference avoidance processing unit of Fig. 1 shifts the drive timing of the driving control unit.
[Fig. 4] Fig. 4 is a flowchart showing an interference determination process of the embodiment.
[Fig. 5] Fig. 5 is a flowchart showing a distance data correction process of the embodiment.
[Fig. 6] Fig. 6 is a flowchart showing an interference avoidance process of the embodiment.

### DESCRIPTION OF EMBODIMENTS

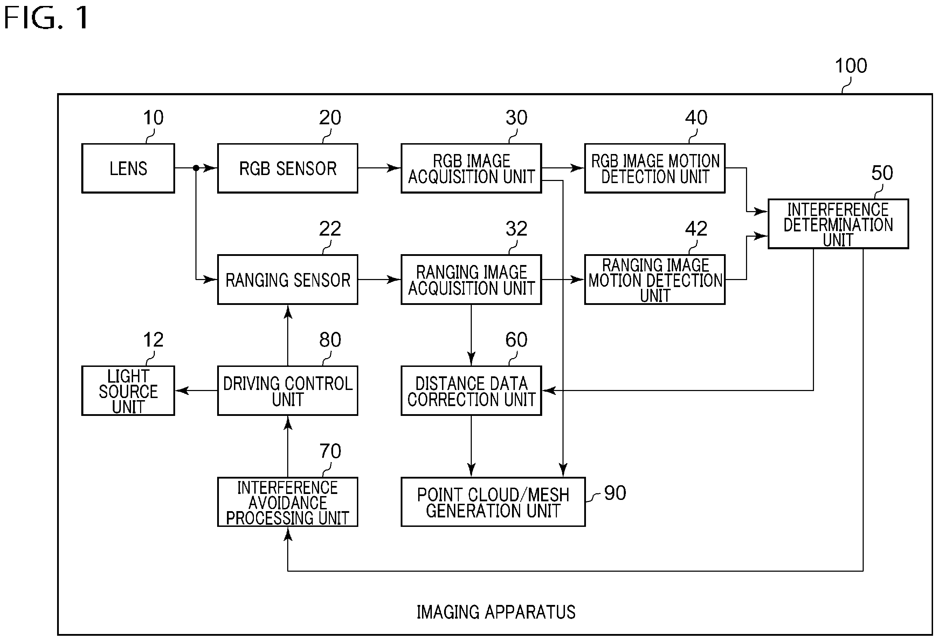

Fig. 1 shows a configuration of an imaging apparatus 100 according to the embodiment. The imaging apparatus 100 includes a lens 10, a light source unit 12, an RGB sensor 20, a ranging sensor 22, an RGB image acquisition unit 30, a ranging image acquisition unit 32, an RGB image motion detection unit 40, a ranging image motion detection unit 42, an interference determination unit 50, a distance data correction unit 60, an interference avoidance processing unit 70, a driving control unit 80, and a point cloud/mesh generation unit 90.

In the embodiment, an object is ranged by using multiple imaging apparatuses 100, and a three-dimensional model of the object is generated based on a distance to the object.

The lens 10 focuses a reflected light from the object irradiated with a visible light on the RGB sensor 20.

The light source unit 12 irradiates the object with an infrared light. The lens 10 focuses a reflected light from the object irradiated with the infrared light on the ranging sensor 22.

The ranging sensor 22 detects a distance to the object by measuring the time it takes for the light irradiating the object to return by being reflected by the object. In this example, a ToF configured to irradiate an object with an infrared light and acquire a ranging image by photographing the reflected light from the object is used.

In this example, a monocular configuration in which the RGB sensor 20 and the ranging sensor 22 share a single coaxial lens 10 and the light is split into two beams by a beam splitter or the like is illustrated. Alternatively, a multinocular configuration in which the lens of the RGB sensor and the lens of the ranging sensor 22 are arranged side by side may be employed. In the case of a multinocular configuration, it is possible to configure the lenses to be substantially coaxial by shifting the pixels in an amount defined by a gap between the optical axes of the two lenses. The term "coaxial" is intended to cover a case where the same lens is shared physically and a case where two lenses are arranged side by side and the pixels are shifted.

The RGB image acquisition unit 30 acquires R, G, and B data for the image from the RGB sensor 20 and saves an RGB image in a frame buffer.

The ranging image acquisition unit 32 acquires pixel-by-pixel ranging data from the ranging sensor 22 and saves a ranging image in a frame buffer. The pixel value of the ranging image represents distance data (depth value).

The RGB image motion detection unit 40 detects a motion in the RGB image pixel-by-pixel by finding a difference between the current frame and the previous frame of the RGB image.

The ranging image motion detection unit 42 detects a motion in the ranging image pixel-by-pixel by finding a difference between the current frame and the previous frame of the ranging image. A motion is detected in the ranging image not only when the object has moved. Mutual interference of the infrared light from multiple imaging apparatuses 100 may create a large change between frames of the ranging image of the imaging apparatus 100, which may be detected as a motion.

The interference determination unit 50 determines pixel-by-pixel the presence or absence of interference of infrared light at the time of acquisition of the ranging image, based on the presence or absence of a motion in the RGB image and the presence or absence of a motion in the ranging image.

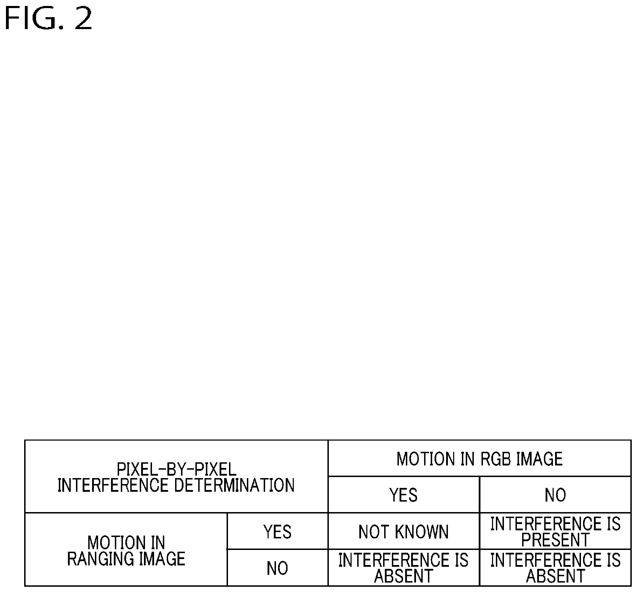

A description will be given, with reference to Fig. 2, of a criterion for determining the presence or absence of infrared light interference pixel-by-pixel by the interference determination unit 50.

The interference determination unit 50 determines that there is interference of infrared light when there isn't any motion in the RGB image and there is a motion in the ranging image. This is because the presence of a motion in the ranging image regardless of the absence of a motion in the RGB image is considered to indicate that the object is not moving, but the infrared light from multiple imaging apparatuses 100 interfere with each other.

The interference determination unit 50 determines that it is not known whether there is interference of infrared light when there is a motion in the RGB image and there is a motion in the ranging image. This is because it is not known, when there is a motion both in the RGB image and the ranging image, whether a motion is also detected in the ranging image because the object has moved, or whether a motion is also detected in the ranging image because the object has moved and there is also interference of infrared light.

The interference determination unit 50 determines that there isn't any interference of infrared light when there isn't any motion in the RGB image and there isn't any motion in the ranging image. The absence of a motion in the RGB image is considered to indicate that the object is no moving and the absence of a motion in the ranging image is considered to indicate there isn't any interference of infrared light.

The interference determination unit 50 determines that there isn't any interference of infrared light when there is a motion in the RGB image and there isn't any motion in the ranging image. The ranging image generally has a lower frame rate or a lower resolution than the RGB image, and a motion may not be detected in the ranging image even if a motion is detected in the RGB image. It is considered that the infrared light is not interfering when there isn't any motion in the ranging image.

For pixels in the ranging image determined to be affected by infrared light interference, the distance data correction unit 60 replaces the distance data for the pixels in the current frame by the distance data for the corresponding pixels in the previous frame. Consequently, abnormal distance data for the current frame caused by infrared light interference at the time of acquisition of the ranging image is corrected by normal distance data for the previous frame. In the case of detecting a motion by sampling several frames, correction may not be limited to the immediately previous frame, but the distance data for the pixels in the current frame may be replaced by the average value of the distance data for the pixels in several past interference-free frames.

Temporary infrared light interference can be dealt with completely by the correction process by the distance data correction unit 60. When infrared light interference continues longer than a predetermined period of time (e.g., a determination that there is interference continues for several tens of frames), however, the interference avoidance processing unit 70 performs an interference avoidance process.

The interference avoidance processing unit 70 performs an interference avoidance process of shifting the drive timing of the driving control unit 80, when a determination that there is infrared light interference in the ranging image continues for a predetermined period of time or longer. The interference avoidance processing unit 70 gives a command to the driving control unit 80 to shift the drive timing by a predetermined period of time. The predetermined period of time is the frame period at a maximum and is automatically adjusted until the interference of infrared light disappears. Given a frame rate of 30 fps (frames per second), for example, the drive timing is shifted by up to 33 milliseconds.

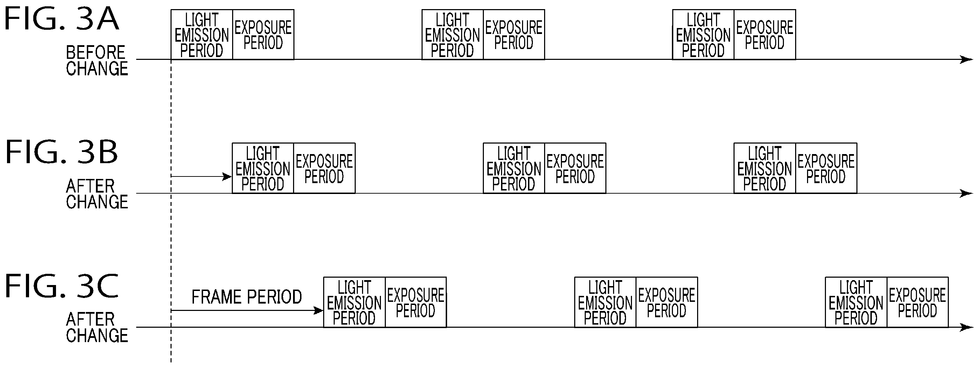

A description will be given, with reference to Fig. 3A-Fig. 3C, of how the interference avoidance processing unit 70 shifts the drive timing of the driving control unit 80.

Fig. 3A shows a period of infrared light emission by the light source unit 12 and an exposure period of the ranging sensor 22 before a change. As the interference avoidance processing unit 70 provides the driving control unit 80 with a command to shift the drive timing of the ranging sensor 22 and the light source unit 12, the light emission period and the exposure period are shifted as shown in Fig. 3B. The maximum amount of shift in light emission timing is the frame period, and Fig. 3C shows a case where the light emission timing is shifted by the frame period. The amount of shift in light emission timing is automatically adjusted until the interference of infrared light disappears.

The driving control unit 80 controls the light source unit 12 to emit an infrared light according to the drive timing indicated by the interference avoidance processing unit 70 and controls the ranging sensor 22 to be exposed after the infrared light is emitted.

In an alternative method, the interference avoidance processing unit 70 changes the driving frequency of the ranging sensor 22 when a determination that there is infrared light interference in the ranging image continues for a predetermined period of time or longer. In general, ranging modes such as Near (small distance), Mid (medium distance), and Far (long distance), each with a different driving frequency, are made available in the ranging sensor 22 depending on the depth. Thus, the interference avoidance processing unit 70 can change the driving frequency by switching the ranging mode of the ranging sensor 22. Changing the driving frequency changes the time of infrared light emission and the exposure time of the sensor with the result that the timing of infrared light emission is shifted to avoid interference.

The point cloud/mesh generation unit 90 generates point cloud data for the object by using the RGB image acquired by the RGB image acquisition unit 30, the ranging image corrected by the distance data correction unit 60, and camera-specific internal parameters such as focal length and image center. The point cloud/mesh generation unit 90 generates mesh (polygon) data for the object from the point cloud data. An example of a method used to generate mesh data from point cloud data is Open3D's Ball-Pivoting algorithm, but the method is not limited to this.

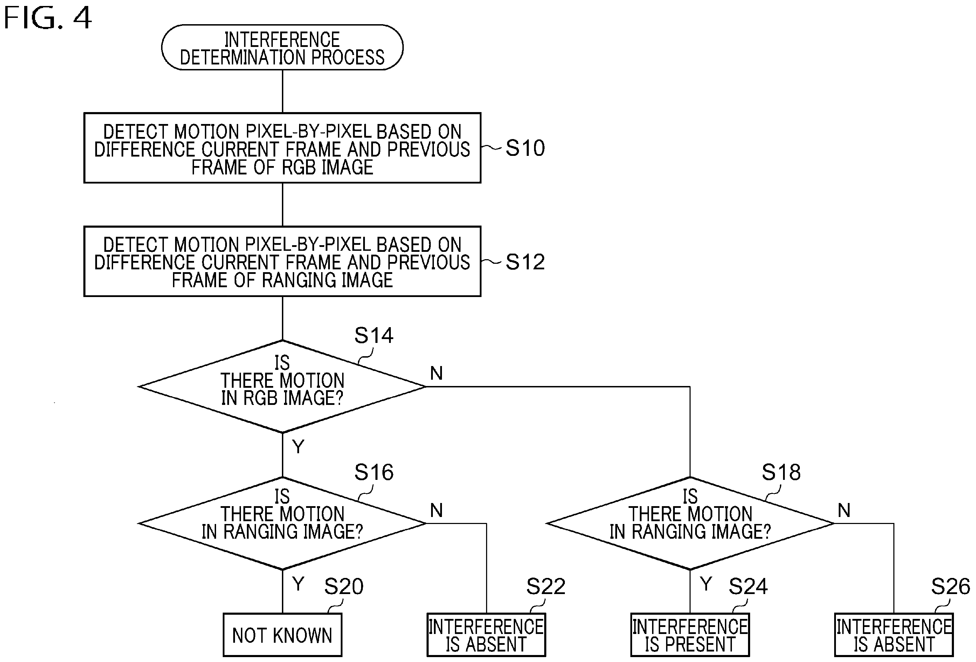

Fig. 4 is a flowchart showing an interference determination process of the embodiment.

The RGB image motion detection unit 40 detects a motion in the RGB image pixel-by-pixel by finding a difference between the current frame and the previous frame of the RGB image (S10).

The ranging image motion detection unit 42 detects a motion in the ranging image pixel-by-pixel by finding a difference between the current frame and the previous frame of the ranging image (S12).

The interference determination unit 50 determines that it is not known whether there is interference of infrared light (S20) when there is a motion in the RGB image (Y in S14) and there is a motion in the ranging image (Y in S16).

The interference determination unit 50 determines that there isn't any interference of infrared light (S22) when there is a motion in the RGB image (Y in S14) and there isn't any motion in the ranging image (N in S16).

The interference determination unit 50 determines that there is interference of infrared light (S24) when there isn't any motion in the RGB image (N in S14) and there is a motion in the ranging image (Y in S18).

The interference determination unit 50 determines that there isn't any interference of infrared light (S26) when there isn't any motion in the RGB image (N in S14) and there isn't any motion in the ranging image (N in S18).

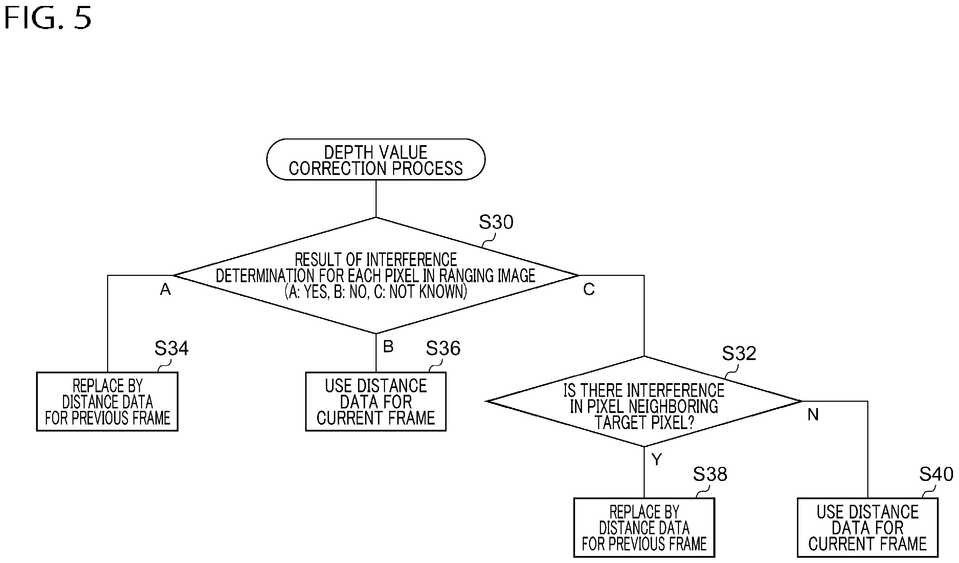

Fig. 5 is a flowchart showing a distance data correction process of the embodiment.

The result of interference determination by the interference determination unit 50 is examined for each pixel in the ranging image (S30).

When there is interference in a given pixel in the ranging image (A in S30), the distance data correction unit 60 replaces the distance data for the current frame of the ranging image by the corresponding distance data for the previous frame (S34).

When there isn't any interference in the given pixel in the ranging image (B in S30), the distance data correction unit 60 uses the distance data for the current frame of the ranging image as it is (S36).

When the presence or absence of interference in the given pixel in the ranging image is not known (C in S30), the presence or absence of interference in a pixel neighboring the given pixel is examined (S32).

When there is interference in the pixel neighboring the given pixel (Y in S32), the distance data correction unit 60 replaces the distance data for the current frame of the ranging image by the corresponding distance data for the previous frame (S38).

When there isn't any interference in the pixel neighboring the given pixel (N in S32), the distance data correction unit 60 uses the distance data for the current frame of the ranging image as it is (S40).

When the presence or absence of interference in the pixel neighboring the given pixel is examined in step S32, the presence or absence of interference in pixels adjacent to the given pixel or in surrounding pixels in a range of up to two pixels is examined. In an alternative method, the presence or absence of interference may be examined in pixels surrounding the given pixel, restricting the examination in an area of a person's body part or an object detected in the image. Still alternatively, the presence or absence of interference may be examined in pixels surrounding the given pixel, restricting the examination in an area in the RGB image having the same color as the given pixel.

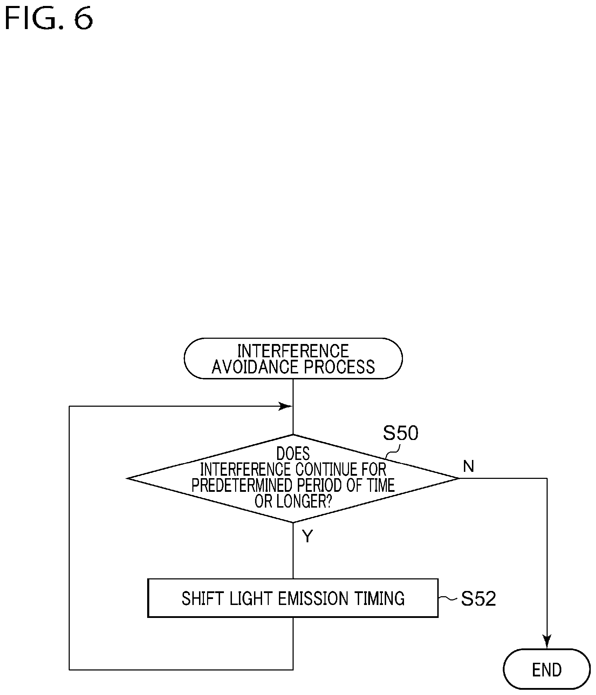

Fig. 6 is a flowchart showing an interference avoidance process of the embodiment.

The interference determination unit 50 examines whether a determination that there is infrared light interference continues for a period of time or longer (S50).

When a determination that there is infrared light interference continues for a predetermined period of time or longer (Y in S50), the interference avoidance processing unit 70 shifts the driving timing of the driving control unit 80 (S52).

Referring back to step S50, when interference continues to be detected as a result of a further interference determination by the interference determination unit 50 (Y in S50), the drive timing of the driving control unit 80 is further shifted (S52). This loop is repeated, and, when interference no longer continues (N in S50), the interference avoidance process is terminated.

In step S52, the driving frequency of the ranging sensor 22 may be changed instead of shifting the drive timing of the driving control unit 80.

As described above, the imaging apparatus 100 of the embodiment can, when used to range an object by multiple imaging apparatuses 100, detect and avoid infrared interference alone. Accordingly, it is not necessary to install a synchronization signal line between the multiple imaging apparatuses 100 so that the processing load during ranging is reduced. Further, distance data for a pixel in the current frame of a ranging image affected by infrared interference is replaced by distance data for a corresponding pixel in the previous frame. Accordingly, abnormal distance data is corrected to normal distance data, disturbance in three-dimensional video data for the object due to interference is removed, and high-quality three-dimensional video data can be generated.

Described above is an explanation based on an exemplary embodiment. The embodiment is intended to be illustrative only and it will be understood by those skilled in the art that various modifications to combinations of constituting elements and processes are possible and that such modifications are also within the scope of the present invention.

### INDUSTRIAL APPLICABILITY

The present invention can be used in imaging technology and interference detection technology.

### REFERENCE SIGNS LIST

10 lens, 12 light source unit, 20 RGB sensor, 22 ranging sensor, 30 RGB image acquisition unit, 32 ranging image acquisition unit, 40 RGB image motion detection unit, 42 ranging image motion detection unit, 50 interference determination unit, 60 distance data correction unit, 70 interference avoidance processing unit, 90 point cloud/mesh generation unit, 100 imaging apparatus

## Claims

1. An imaging apparatus comprising:
an RGB image acquisition unit that acquires an RGB image of an object;
a ranging image acquisition unit that acquires a ranging image of the object coaxially;
an RGB image motion detection unit that detects a motion in the RGB image pixel-by-pixel by finding a difference between a current frame and a previous frame of the RGB image;
a ranging image motion detection unit that detects a motion in the ranging image pixel-by-pixel by finding a difference between a current frame and a previous frame of the ranging image; and
an interference determination unit that determines presence or absence of interference of infrared light at a time of acquisition of the ranging image, based on presence or absence of a motion in the RGB image and presence or absence of a motion in the ranging image.

2. The imaging apparatus according to claim 1,
wherein the interference determination unit determines that there is interference of infrared light when there isn't any motion in the RGB image and there is a motion in the ranging image.

3. The imaging apparatus according to claim 1 or 2, further comprising:
a distance data correction unit that replaces, for a pixel in the ranging image determined to be affected by infrared light interference, distance data for the pixel in a current frame by distance data for a corresponding pixel in a previous frame.

4. The imaging apparatus according to claim 1 or 2, further comprising:
an interference avoidance processing unit that shifts an infrared light emission timing when a determination that there is infrared light interference in the ranging image continues for a predetermined period of time or longer.

5. An interference determination method comprising:
detecting a motion in an RGB image of an object pixel-by-pixel by finding a difference between a current frame and a previous frame of the RGB image;
detecting a motion in a coaxially acquired ranging image of the object by pixel by finding a difference between a current frame and a previous frame of the ranging image; and
determining presence or absence of interference of infrared light at a time of acquisition of the ranging image, based on presence or absence of a motion in the RGB image and presence or absence of a motion in the ranging image.
